Europäisches Patentamt

European Patent Office

Office européen des brevets

(19)

(11) EP 0 888 471 B1

(12) FASCICULE DE BREVET EUROPEEN

(45) Date de publication et mention
de la délivrance du brevet:
**19.03.2003 Bulletin 2003/12**

(51) Int Cl.⁷: **D04H 1/54**, D04H 13/00,
D04H 5/06

(21) Numéro de dépôt: **98903064.8**

(22) Date de dépôt: **14.01.1998**

(86) Numéro de dépôt international:
**PCT/FR98/00067**

(87) Numéro de publication internationale:
**WO 98/031857 (23.07.1998 Gazette 1998/29)**

(54) **PROCEDE ET DISPOSITIF DE FABRICATION DE PLAQUES COMPOSITES**

VERFAHREN UND VORRICHTUNG ZUR HERSTELLUNG VON VERBUNDPLATTEN

METHOD AND DEVICE FOR MAKING COMPOSITE SHEETS

(84) Etats contractants désignés:
**BE CH DE DK FR GB LI NL SE**

(30) Priorité: **16.01.1997 FR 9700387**

(43) Date de publication de la demande:
**07.01.1999 Bulletin 1999/01**

(73) Titulaire: **Saint-Gobain Vetrotex France S.A.**
**73000 Chambéry (FR)**

(72) Inventeurs:
 • **LOUBINOUX, Dominique**
 **F-38660 La Terrasse (FR)**
 • **VOIRON, Jacques**
 **F-73160 Saint-Jean de Couz (FR)**

 • **DEBALME, Jean-Paul**
 **F-73000 Chambéry (FR)**
 • **SAINT-JOHN, Charles**
 **F-73290 La Motte Servolex (FR)**

(74) Mandataire: **Muller, René**
**SAINT-GOBAIN RECHERCHE**
**39, quai Lucien Lefranc**
**93303 Aubervilliers (FR)**

(56) Documents cités:
**EP-A- 0 616 055**       **WO-A-95/12553**
**GB-A- 994 336**        **GB-A- 2 226 054**
**US-A- 4 722 857**       **US-A- 5 294 482**

EP 0 888 471 B1

## Description

La présente invention concerne un procédé et un dispositif de mise en oeuvre dudit procédé pour la fabrication de plaques composites. Elle concerne également les produits composites obtenus.

Il est déjà connu de fabriquer des plaques composites, sous forme de panneaux ou de pièces courbes, à partir de tissus formés à la fois de fils de renforcement et de fils thermoplastiques, en empilant les tissus puis en pressant à chaud l'empilage ainsi réalisé, comme décrit dans le certificat d'utilité FR 2 500 360. Un tel procédé présente notamment le désavantage d'être un procédé discontinu.

La demande de brevet déposée en France sous le numéro de dépôt 96/00578 décrit par ailleurs la fabrication de plaques composites à partir de tissus verre/matière organique que l'on dépose en continu sur un convoyeur puis que l'on préchauffe dans un four à air chaud avant de les introduire dans une « presse à bandes » (du type de celle décrite dans le brevet US-A-4 277 539) où ils sont successivement chauffés et refroidis, tout en étant comprimés. Un tel procédé est rapide et permet d'obtenir des plaques aptes au moulage et présentant de bonnes propriétés mécaniques.

On observe cependant, sur certaines de ces plaques, des défauts d'alignement des filaments de verre (présence d'ondulations) dans le sens longitudinal (direction de défilement du convoyeur) ou dans le sens transversal, dus à une mauvaise réorganisation des fils après l'étape de préchauffage et au retrait transversal des tissus après cette même étape. Ces défauts, peu gênants dans de nombreuses applications, peuvent néanmoins ne pas être souhaités dans certaines applications très particulières (notamment dans la fabrication d'articles thermoformés plans de grande dimension tels que des plateaux de manutention, d'alimentation, etc. où les défauts d'alignement des filaments peuvent être à l'origine de déformations au sein des articles).

Le document GB-A-2 226 054 décrit un procédé dans lequel on combine des filaments de matière polymère produits par extrusion, avec des fils de renforcement provenant d'enroulements, de façon à former une nappe de fils de renforcement provenant d'enroulements, de façon à former une nappe de fils non tissés. La nappe est ensuite aiguilletée afin de lier les fils de renforcement au reste de la nappe puis est passée dans un calandre chauffée avant d'être collectée sous forme d'enroulement. Ce procédé de même que celui décrit dans le document EP-A-0 803 602 ne permet pas une réorganisation des filaments dans la nappe ni un déplissage de celle-ci.

Le document US-A-4 722 857 décrit également un procédé de fabrication de nappes de fils non tissés dans lequel les fils sont comprimés et chauffés entre des rouleaux afin d'obtenir la structure désirée.

La présente invention a pour but de fournir un procédé et un dispositif améliorés pour la fabrication de plaques composites, ce procédé et ce dispositif ne présentant pas les inconvénients des procédés et dispositifs existants précédemment mentionnés et permettant d'obtenir des plaques aptes notamment à la fabrication par thermoformage d'articles plans présentant des caractéristiques améliorées.

Ce but est atteint grâce au procédé selon l'invention comprenant au moins les étapes suivantes :

- on introduit en continu au moins une nappe de fils, cette nappe comprenant au moins deux matières présentant des points de fusion différents, dans une zone où elle est chauffée à une température comprise entre lesdits points de fusion et inférieure à la température de dégradation de la matière présentant le point de fusion le plus bas,
- on fait passer la nappe sur au moins une barre tournante chauffée à une température comprise entre lesdits points de fusion et inférieure à la température de dégradation de la matière présentant le point de fusion le plus bas,
- on comprime la nappe au sortir de la ou des barres et on la refroidit de façon à former une bande composite,
- on collecte la bande sous forme d'une ou plusieurs plaques composites.

Par « plaque », on entend selon la présente invention un élément peu épais par rapport à sa surface, généralement plan (mais pouvant éventuellement être courbé) et rigide bien que présentant le cas échéant une souplesse suffisante pour pouvoir être collecté et stocké sous forme enroulée. De façon générale, il s'agit d'un élément plein mais il peut dans certains cas être ajouré (le terme « plaque » désigne ainsi également par extension des structures de type grille, selon l'invention).

La nappe de fils est formée de fils d'au moins deux matières présentant des points de fusion différents. Ces deux matières peuvent être par exemple des matières organiques thermoplastiques, mais il s'agit de préférence d'une matière organique thermoplastique et d'une matière de renforcement de cette matière organique thermoplastique (par exemple verre, carbone, aramide, etc.). En général et de préférence, la nappe est constituée d'une matière de renforcement (avantageusement du verre) et d'une ou éventuellement plusieurs matière(s) organique(s) thermoplastique(s). La nappe comprend généralement entre 20 et 90 % en poids de matière de renforcement (de préférence du verre), de préférence entre 30 et 85 % en poids de matière de renforcement et de façon particulièrement préférée entre 40 et 80 % en poids de matière de renforcement. Elle peut comprendre en partie des fils constitués de l'une des matières et en partie des fils constitués de l'autre matière, ces fils étant disposés en alternance dans la nappe et étant de préférence intimement mélangés. Elle peut également comprendre des fils mixtes obtenus par la réunion et le bobinage simultané des fils de l'une des matières et des fils de l'autre matière, ces fils mixtes pouvant également être mélangés avec des fils de l'une des matières et/ou avec des fils de l'autre matière.

De préférence, la nappe de fils comprend au moins 50 % (avantageusement au moins 80 % et de façon particulièrement préférée 100 %) en poids de fils co-mêlés, c'est-à-dire de fils composés de filaments de l'une des matières et de filaments de l'autre matière, les filaments étant mélangés au sein des fils (avantageusement de façon approximativement homogène), ces fils étant généralement obtenus par assemblage des filaments directement lors de la fabrication desdits filaments (selon les procédés décrits par exemple dans les demandes de brevets EP-A-0 590 695 et EP-A-0 616 055). L'utilisation de nappes présentant au moins 50 % et de préférence au moins 80 % en poids de fils co-mêlés permet notamment d'obtenir des composites plus homogènes, présentant de bonnes propriétés mécaniques, la réalisation des plaques composites se faisant en outre dans un temps réduit et avantageusement à plus faible pression. De préférence, ces fils co-mêlés sont constitués de filaments de verre et de filaments de matière organique thermoplastique intimement mélangés.

Dans de nombreux cas, la nappe de fils se présente sous forme de réseau ou ensemble de réseaux de fils entrecroisés et, de préférence, se présente sous forme de tissu(s) (généralement une bande de tissu(s)). Les mêmes fils ou ensembles de fils peuvent être utilisés pour former la chaîne et la trame du tissu ou réseau, ou la trame et la chaîne peuvent être constituées de fils différents ou d'associations différentes de fils. Ainsi, la nappe de fils peut se présenter par exemple sous forme de tissu(s) dont la chaîne est constituée de fils co-mêlés matière organique/matière de renforcement et dont la trame est constituée de 80 à 100 % de fils de matière organique de même nature que celle des fils co-mêlés. La plaque obtenue peut alors présenter une direction préférentielle d'orientation des fils de renforcement (plaque unidirectionnelle). La nappe de fils peut également se présenter avantageusement, dans des modes particuliers de réalisation de plaques unidirectionnelles, sous la forme de faisceaux de fils parallèles jointifs ou faiblement espacés (l'espacement entre les fils étant de préférence inférieur à 2 mm), ces fils étant préférentiellement, dans ce mode de réalisation, des fils co-mêlés.

Selon un mode de réalisation préféré de la présente invention, la nappe comprend un ensemble de fils continus approximativement parallèles que l'on oriente dans la direction de mouvement de la nappe lors du procédé (direction longitudinale) et, de façon particulièrement préférée, comprend également un second ensemble de fils approximativement parallèles orientés transversalement à cette direction et entremêlés (de préférence tissés) avec les fils du premier ensemble.

Dans le procédé selon l'invention, la nappe de fils est le plus souvent déroulée à partir d'un support ou de plusieurs supports (le cas échéant lorsqu'il s'agit de fils parallèles) sur le(s)quel(s) elle est bobinée.

La nappe de fils (se déplaçant avec une vitesse comprise par exemple entre 0,5 et 5 m/min) passe dans au moins une zone où elle est chauffée à une température comprise entre les points de fusion des matières constituant la nappe, cette température étant également inférieure à la température de dégradation de la matière présentant le point de fusion le plus bas. Par extension, la « température de dégradation » désigne, dans la présente invention, la température minimale à laquelle on observe une décomposition des molécules constituant la matière (comme traditionnellement défini et compris par l'homme de l'art) ou on observe une altération indésirable de la matière telle qu'une inflammation de la matière, une perte d'intégrité de la matière (se traduisant par un écoulement de la matière hors de la nappe) ou une coloration indésirable de la matière (par exemple un jaunissement). Cette température de dégradation peut être évaluée de façon traditionnelle par thermogravimétrie et/ou en notant la température minimale à laquelle l'un des effets précédemment cités se produit.

Dans la présente invention, la nappe de fils est chauffée suffisamment pour permettre la liaison d'une partie au moins des fils entre eux par l'intermédiaire de la matière de plus bas point de fusion après compression, et dans la plupart des cas (excepté dans le cas où l'on recherche plutôt une structure de type grille) pour permettre l'obtention d'une structure pleine ou approximativement pleine, c'est-à-dire présentant préférentiellement un taux volumique de vide inférieur à 5 %. Dans le cas d'une plaque composite verre/matière organique, le taux volumique de vide $V_v$ est calculé à partir du taux massique de verre $M_f$ mesuré par perte au feu, de la masse volumique $\rho_f$ de la fibre de verre (égale à 2.6 g/cm$^3$), de la masse volumique $\rho_m$ de la matière organique et de la masse volumique $\rho$ du composite selon la formule :

$$V_v = 1 - \rho \, [M_f / \rho_f + (1 - M_f) / \rho_m]$$

A titre d'exemples, la température de chauffage peut être de l'ordre de 190 à 230°C lorsque la nappe de fils est constituée de verre et de polypropylène, elle peut être de l'ordre de 280 à 310°C lorsque la nappe est constituée de verre et de polytéréphtalate d'éthylène (PET) et elle peut être de l'ordre de 270 à 280-290°C lorsque la nappe est constituée de verre et de polytéréphtalate de butylène (PBT).

De préférence, la matière de plus bas point de fusion présente un point de fusion inférieur d'au moins 40°C et de préférence d'au moins 50°C au point de fusion de la matière de plus haut point de fusion afin de garantir la conservation d'une structure porteuse (ou d'une structure suffisamment rigide) au sein de la nappe de fils au cours du procédé de fabrication.

Pour effectuer le chauffage, on utilise généralement et préférentiellement au moins un four ou un dispositif d'irradiation, de préférence au moins un dispositif à rayonnement infrarouge (sous forme, par exemple, d'un four ou de lampe(s) ou panneau(x) infrarouge...) et/ou au moins un dispositif à soufflage d'air chaud (par exemple un four à air chaud à convection forcée).

Dans une seconde étape, importante, du procédé selon l'invention, la nappe de fils passe sur au moins une barre « tournante » (en rotation autour d'un axe traversant la barre dans le sens de la longueur), chauffée, cette barre pouvant éventuellement être située dans la zone de chauffage précédemment mentionnée mais étant généralement située à la sortie ou la suite de ladite zone de chauffage. La nappe se trouve alors déjà à l'état chauffé, avantageusement et de préférence à l'état « partiellement » fondu, c'est-à-dire que l'un de ces constituants se présente sous forme fondue ou éventuellement ramollie. La barre tournante est chauffée à une température qui peut être proche ou différente (de quelques degrés ou dizaines de degrés, par exemple de plus ou moins 30°C) de celle de la zone de chauffage mentionnée précédemment et est de préférence chauffée à une température supérieure ou égale à celle de ladite zone de chauffage.

L'utilisation de cette barre présente plusieurs avantages : cette barre permet, le cas échéant, d'amener la nappe de fils sous un angle choisi par rapport au dispositif de compression (généralement sous forme d'au moins une calandre à deux cylindres) qui se trouve à sa suite, afin notamment d'éviter, avant compression, un contact trop important entre la nappe et le dispositif de compression lorsque ce dispositif est refroidi ; la barre tournante chauffée permet également, le cas échéant, de réorganiser les fils au sein de la nappe et permet d'éliminer en grande partie ou en majorité les ondulations habituellement observées après fusion de la matière de plus bas point de fusion, tout en évitant le dépôt et l'accumulation de matière fondue sur la barre, ces avantages n'étant pas conjointement obtenus en cas d'utilisation d'une barre seulement tournante ou seulement chauffée. L'accumulation de matière fondue sur la barre est à éviter, cette matière finissant par se redéposer sur la nappe et entraînant des irrégularités au sein de la bande composite obtenue. L'utilisation de la barre permet également d'améliorer la compacité et l'état de surface de la bande obtenue.

La barré est préférentiellement cylindrique ou approximativement cylindrique, ou de section circulaire ou approximativement circulaire, la section pouvant varier ou non. Elle présente avantageusement un faible diamètre (par rapport notamment à un cylindre de calandre), le diamètre de cette barre étant en outre généralement faible par rapport à sa longueur (le rapport longueur sur diamètre étant généralement supérieur à 20 pour cette barre contrairement, par exemple, à un cylindre de calandre pour lequel la valeur longueur sur diamètre excède rarement 15). La barre présente généralement un diamètre compris entre 1 et 10 cm et de préférence un diamètre de 2,5 à 6 cm et est recouverte d'un revêtement avantageusement résistant à la chaleur et anti-adhérant ; elle est par exemple réalisée en acier recouvert de polytétrafluoroéthylène (PTFE). Elle peut avantageusement présenter une ou plusieurs rainures hélicoïdales ou un relief sous forme d'hélices opposées aidant au déplissage de la nappe de fils et peut éventuellement être légèrement courbée.

La vitesse périphérique de rotation de la barre peut être supérieure ou égale à la vitesse de déplacement de la nappe au sein de l'installation de fabrication (par exemple de l'ordre de 0,5 à 10 m.min$^{-1}$ et, de préférence, de 0,5 à 5 m.min$^{-1}$ pour une vitesse de déplacement de la nappe de 0,1 à 2,5 m.min$^{-1}$), notamment lorsque la barre présente un diamètre de l'ordre de 1 à 4 cm, ou peut être inférieure ou égale à la vitesse de déplacement de la nappe (par exemple de l'ordre de 0,25 à 2,2 m.min$^{-1}$ pour une vitesse de déplacement de la nappe de 0,5 à 2,5 m.min$^{-1}$), notamment lorsque la barre présente un diamètre supérieur à 4 cm. La rotation de la barre peut s'effectuer dans le même sens, notamment lorsque la barre présente un diamètre supérieur à 4 cm, ou dans le sens contraire au sens de progression de la nappe.

Généralement, une seule barre est nécessaire et suffisante pour la mise en oeuvre du procédé selon l'invention. Cependant, notamment lorsque la nappe présente des ondulations importantes, il est possible d'utiliser deux barres (voire plus de deux barres) tournantes et chauffées selon l'invention, les fils passant alors successivement sur chacune des barres (c'est-à-dire sur l'une puis sur l'autre), ces barres étant généralement placées les unes à la suite des autres.

De préférence selon l'invention, la nappe de fils de verre vient au contact d'au moins une barre tournante chauffée (ou éventuellement de chaque barre tournante chauffée lorsqu'il y en a plusieurs), sur une portion de la barre (sur un arc de cercle) que délimite (ou sous-tend) un angle au centre compris entre 45 et 200° (c'est-à-dire que la nappe passe sur une partie de la circonférence de la barre, cette partie représentant de 12,5 à 55,5 % de ladite circonférence) afin d'obtenir, notamment, une réorganisation significative des filaments au sein de la nappe.

Après passage sur la ou les barres, la nappe de fils chauffée subit une compression à l'aide d'un dispositif de compression, par exemple à l'aide d'au moins une calandre à deux cylindres. La force exercée sur la nappe lors de son passage dans le dispositif de compression, par exemple. lors de son passage simultané entre deux cylindres d'une calandre, est généralement de plusieurs dizaines de N/cm, voire de plusieurs centaines de N/cm (à ce sujet, on peut remarquer que la (les) barre(s) tournante(s) précédemment mentionnée (s), contrairement à des cylindres de calandre, ne permet(tent) pas et n'a (n'ont) pas pour objet de comprimer la nappe, la seule force exercée au niveau de chaque barre étant due à la tension de la nappe et n'excédant pas généralement 5 N/cm).

La pression exercée dans le dispositif de compression compacte la nappe de fils, la structure obtenue étant figée par refroidissement, ce refroidissement pouvant s'effectuer, au moins en partie, simultanément à la compression ou pouvant également s'effectuer après une étape de compression à chaud.

Le dispositif de compression peut comprendre au moins une calandre, notamment une calandre maintenue à une température inférieure au point de solidification de la matière de plus bas point de fusion (la calandre est par exemple à une température comprise entre 20 et 150°C) afin de la solidifier.

Le dispositif de compression peut aussi comprendre plusieurs calandres, notamment dans le cas de fortes épaisseurs et si l'on souhaite une très bonne planéité et/ou des vitesses de production élevées. Par ailleurs, dans le cas, notamment, où l'on utilise des matières de points de fusion élevés ou présentant une vitesse de cristallisation importante (par exemple des polyesters) et où l'on cherche à obtenir des plaques pleines ou approximativement pleines, il peut être souhaitable de chauffer la calandre (ou la première calandre au moins) du dispositif de compression au sortir de la (des) barre(s), à une température supérieure à 75°C et de préférence supérieure à 100°C voire supérieure à 150°C. Dans ce cas, les cylindres de la calandre chauffée sont préférentiellement recouverts d'un revêtement anti-adhérant à base de PTFE par exemple et/ou l'on déroule un film démoulant (en papier siliconé ou en toile de verre enduite de PTFE par exemple) entre chaque cylindre et la nappe de fils (ce film pouvant être éventuellement sous la forme d'une bande sans fin).

Selon un mode de réalisation de l'invention, le dispositif de compression peut également comprendre ou consister en une presse à bandes (munie, par exemple, de bandes en acier ou en toile de verre ou en toile d'aramide, la toile étant préférentiellement enduite de PTFE) comprenant une zone chaude (avec notamment une ou des calandres) suivie d'une zone froide (avec des éléments de refroidissement sous forme de barres, plaques... et éventuellement une ou des calandres).

Afin d'accélérer son refroidissement, la bande composite obtenue au sortir du dispositif de compression précité peut passer sur une table de refroidissement dans laquelle circule de l'eau froide, cette table étant éventuellement légèrement bombée afin d'améliorer le contact avec la bande. Afin d'améliorer encore le refroidissement et/ou le contact, la table peut être associée à des rouleaux presseurs, de préférence refroidis (par circulation d'eau par exemple) et/ou à une (des) plaque(s) refroidie(s) en appui libre ou pressées et/ou à une ou des buses de soufflage d'air et/ou la bande peut être tirée par des rouleaux d'appel situés par exemple au sortir de la table.

La bande composite, après compression et refroidissement, peut être enroulée sur un mandrin dont le diamètre est fonction de l'épaisseur de la bande (la plaque formée correspond alors à la bande enroulée) ou peut être coupée par un dispositif de coupe (dispositif à massicot ou à scie circulaire par exemple) de façon à former plusieurs plaques.

Le procédé selon l'invention présente plusieurs variantes. Il est notamment possible d'associer plusieurs nappes de fils afin de former des plaques d'épaisseur plus importante. Ainsi, selon un mode de réalisation de l'invention :

- on introduit en continu une première nappe de fils, cette nappe comprenant au moins deux matières présentant des points de fusion différents, dans une première zone où elle est chauffée à une température comprise entre lesdits points de fusion et inférieure à la température de dégradation de celle des matières de cette première nappe présentant le point de fusion le plus bas,

- on introduit simultanément en continu au moins une seconde nappe de fils comprenant au moins deux matières présentant des points de fusion différents, dans une zone (généralement une seconde zone) où elle est chauffée à une température comprise entre lesdits points de fusion et inférieure à la température de dégradation de celle des matières de cette seconde nappe présentant le point de fusion le plus bas,

- on fait passer la première nappe sur une première barre ou série de barres tournante(s) chauffée(s) à une température comprise entre les points de fusion des matières de la première nappe et inférieure à la température de dégradation de celle de ces matières présentant le point de fusion le plus bas,

- on fait passer simultanément au moins la seconde nappe au moins sur une seconde barre

ou série de barres tournante(s) chauffée(s) à une température comprise entre les points de fusion des matières de la seconde nappe et inférieure à la température de dégradation de celle de ces matières présentant le point de fusion le plus bas,

- on réunit au moins les deux nappes que l'on comprime simultanément au sortir d'au moins une des barres ou série de barres et on refroidit l'ensemble de façon à former une bande composite,
- on collecte la bande sous forme d'une ou plusieurs plaques composites.

Ce mode de réalisation permet d'obtenir des plaques d'épaisseur plus importante. De la même façon, selon l'épaisseur de plaque que l'on désire obtenir, on peut associer plusieurs nappes de fils, chaque nappe passant par une zone de chauffage puis sur une barre ou série de barres et les nappes étant réunies en une ou plusieurs étapes au sortir d'une ou plusieurs barre(s) ou série(s) de barres avant compression de l'ensemble. On peut notamment associer les premières nappes, par exemple deux à deux au sortir de leurs barres respectives, l'association finale de l'ensemble des nappes se faisant au sortir de la ou des barres de passage de la dernière nappe ou du dernier couple ou ensemble de nappes, une ou plusieurs des nappes associées étant éventuellement comprimée(s) et/ou réchauffée(s) avant l'association finale. Un tel mode est illustré ultérieurement en figure 2 notamment.

On peut également, avant compression de l'ensemble, dérouler un ou plusieurs films de surface sur une ou deux faces de la nappe ou des nappes associées, ces films adhérant à chaud à la (aux) nappe(s). Ces films peuvent être de matière(s) identique(s) ou différente(s) de celles (ou de l'une de celles) des nappes de fils (ils peuvent être métalliques, organiques...), ces films présentant préférentiellement un revêtement de nature proche de la nature de la matière de plus bas point de fusion présente dans la (les) nappes.

De façon plus générale, on peut mettre en surface de la (des) nappe(s) et/ou introduire entre plusieurs nappes, une ou des plaques ou réseaux ou autres structures planes (par exemple des fils, des grilles, des tissus, des structures alvéolées ou contenant des éléments sous forme de poudre ou de liquide, des feuilles ou panneaux ou films, de nature essentiellement métallique ou polymérique ou minérale, ou en bois...), continues ou discontinues, se différenciant des nappes et conférant des propriétés particulières aux plaques composites obtenues (renforcement supplémentaire par des fils de nature différente, amélioration des propriétés mécaniques, protection contre les rayonnements, électromagnétiques, amélioration de l'isolation thermique ou acoustique, structures composites allégées, aptitude au moulage améliorée, aspect de surface...).

La présente invention concerne également un dispositif de mise en oeuvre du procédé. Ce dispositif comprend :

a) un ou des dispositif(s) (ou organe(s)) d'alimentation d'au moins une nappe de fils,
b) au moins un dispositif (ou organe) de chauffage de la nappe,
c) au moins une barre tournante chauffée ou une série de barres tournantes chauffées placées les unes à la suite des autres sur le passage de la nappe,
d) et, en aval de la ou des barres tournantes chauffées, au moins un dispositif (ou organe) de compression et éventuellement de refroidissement de la nappe.

Avantageusement selon l'invention, les organes a, b, c et d cités précédemment sont des organes distincts, le dispositif selon l'invention comprenant ainsi au moins quatre organes différents remplissant chacun un rôle particulier.

Le dispositif selon l'invention peut également comprendre au moins un dispositif de coupe et/ou au moins un dispositif de collecte des plaques composites. Il peut également comprendre au moins un dispositif de refroidissement de la nappe distinct du dispositif de compression d.

Les plaques composites obtenues grâce à la combinaison d'étapes du procédé selon l'invention comprennent des filaments de matière de plus haut point de fusion (généralement des filaments de renforcement) noyés dans la plaque et disposés généralement pour une partie au moins d'entre eux dans le sens de défilement de la plaque lors de sa fabrication et de préférence également pour l'autre partie (ou au moins une autre partie de ces filaments) dans le sens transversal au sens de défilement. La plaque comprend ainsi au moins un ensemble de filaments de matière de plus haut point de fusion disposés de façon approximativement parallèle suivant une première direction et éventuellement au moins un second ensemble de filaments de matière de plus haut point de fusion disposés de façon approximativement parallèle suivant une seconde direction préférentiellement transversale à la première, tous ces filaments étant noyés dans la matière de plus bas point de fusion et l'amplitude des ondulations éventuelles (ou des déviations) de chaque filament par rapport à sa direction étant inférieure à 0,5 mm (l'amplitude des ondulations pouvant atteindre 2 à 6 mm dans les procédés traditionnels d'obtention de plaques composites). De plus, les plaques pleines obtenues selon l'invention présentent un taux de vide inférieur à 5 %.

D'autres avantages et caractéristiques de l'invention apparaîtront à la lumière des dessins suivants illustrant l'invention, sans toutefois la limiter dans lesquels :

- **la figure 1** représente une vue schématique d'un dispositif permettant une première mise en oeuvre de l'invention,
- **la figure 2** représente une vue schématique d'un dispositif permettant une deuxième mise en oeuvre de l'invention,
- **la figure 3** représente une vue schématique d'un dispositif permettant une troisième mise en oeuvre de l'invention,
- **la figure 4** représente une vue schématique d'un dispositif permettant une quatrième mise en oeuvre de l'invention,
- **la figure 5** représente une vue schématique d'un dispositif permettant une cinquième mise en oeuvre de l'invention,
- **la figure 6** représente une vue schématique d'une partie d'un dispositif de mise en oeuvre de l'invention.

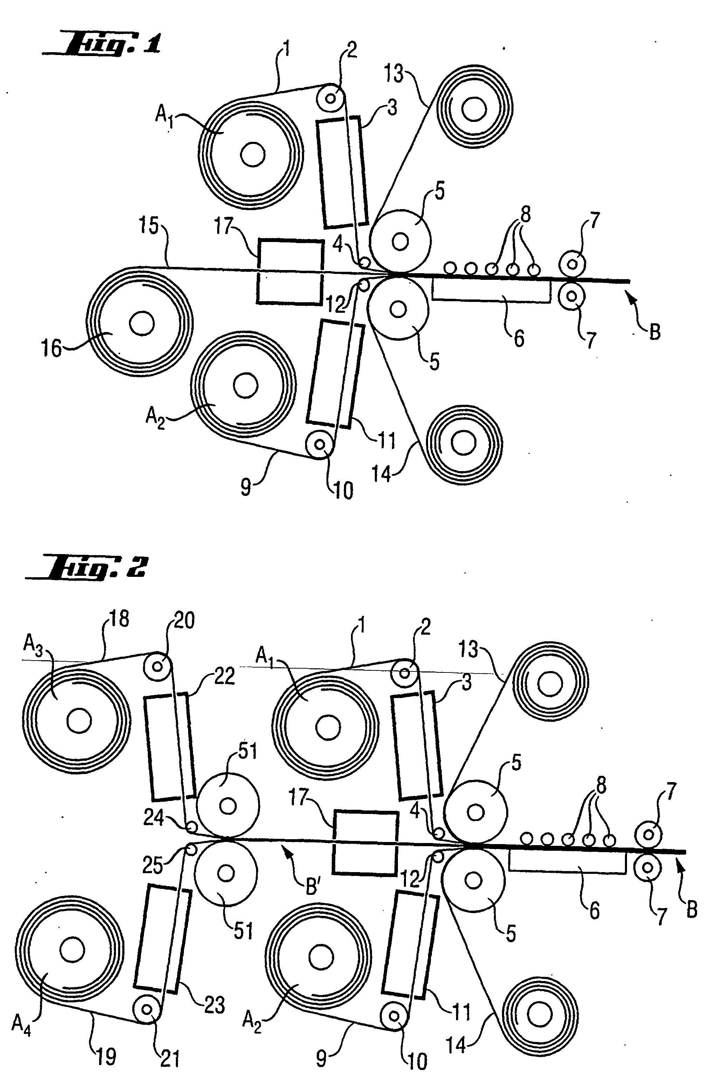

Dans le mode de réalisation illustré en figure 1, un tissu 1 de fils co-mêlés verre/polypropylène est déroulé à partir d'un dispositif d'alimentation (dérouleur) $A_1$. Ce tissu passe sur un rouleau de détour 2 de diamètre compris entre 10 et 20 cm puis pénètre dans un four à rayonnements infrarouges 3 où les filaments de polypropylène au sein du tissu sont fondus. Le tissu passe ensuite à l'état partiellement fondu sur une barre 4 en acier de 1 à 5 cm de diamètre revêtue de PTFE, cette barre étant chauffée au dessus du point de fusion du polypropylène et tournant dans le sens opposé au sens de défilement du tissu, avec une vitesse de rotation ajustable.

Le tissu ainsi déplissé à la fois par la barre et par la tension (notamment de déroulage) exercée sur le tissu et présentant des filaments de verre bien alignés passe ensuite dans une calandre 5 à deux cylindres de 20 à 80 cm de diamètre chacun maintenue à une température inférieure au point de solidification du polypropylène et ressort sous forme d'une bande composite B que l'on refroidit sur une table de refroidissement 6. Afin d'améliorer le contact entre la bande et la table de refroidissement, la bande est tirée par des rouleaux d'appel 7 et pressée contre la table à l'aide de rouleaux presseurs 8 refroidis.

La bande est ensuite enroulée sur un mandrin (non représenté) ou coupée sous forme de plaques par un dispositif, par exemple un dispositif à scie circulaire, posé sur un chariot suiveur.

Dans ce mode de réalisation de l'invention, il est également possible de dérouler un autre tissu 9 de fils co-mêlés verre/polypropylène à partir d'un second dispositif d'alimentation $A_2$, les deux dispositifs d'alimentation étant disposés verticalement et de part et d'autre de la ligne de fabrication (l'alimentation verticale des tissus permettant d'éviter l'affaissement de ceux-ci après leur chauffage). Le second tissu après passage sur un rouleau de détour 10 pénètre dans un autre four 11 à rayonnements infrarouges puis passe sur une autre barre 12 en acier revêtue de PTFE et chauffée approximativement à la même température que celle de la première barre mentionnée. Les tissus 1 et 9 sont ensuite comprimés simultanément par la calandre 5 puis forment une bande d'épaisseur plus importante que dans le cas de l'utilisation d'un seul tissu.

On peut également coller par fusion, dans ce mode de réalisation, un ou deux films de surface 13 et/ou 14 sur une ou deux faces de la bande.

Il est également possible d'obtenir des plaques plus épaisses en introduisant une plaque (de même nature par exemple) 15, dévidée à tension contrôlée à partir d'un dérouleur 16, entre les deux tissus 1 et 9. Les surfaces de la plaque 15 sont préalablement chauffées par le four 17 afin d'assurer un compactage maximal de l'ensemble plaque/tissus dans la calandre 5.

Dans le mode de réalisation illustré en figure 2, on remplace la plaque mentionnée précédemment et introduite entre les deux tissus par une première bande B' de tissus obtenue par assemblage de deux autres tissus, chaque tissu 18, 19 ayant été déroulé d'un dispositif d'alimentation $A_3$, $A_4$, passé sur un rouleau de détour 20, 21 puis dans un four à rayonnements infrarouges 22, 23 puis sur une barre 24, 25 similaire aux deux barres précédemment décrites, les deux tissus ayant ensuite été comprimés simultanément par une calandre 51 afin de former la première bande de tissus mentionnée précédemment. Un tel mode de réalisation utilise en quelque sorte deux modules de fusion/calandrage.

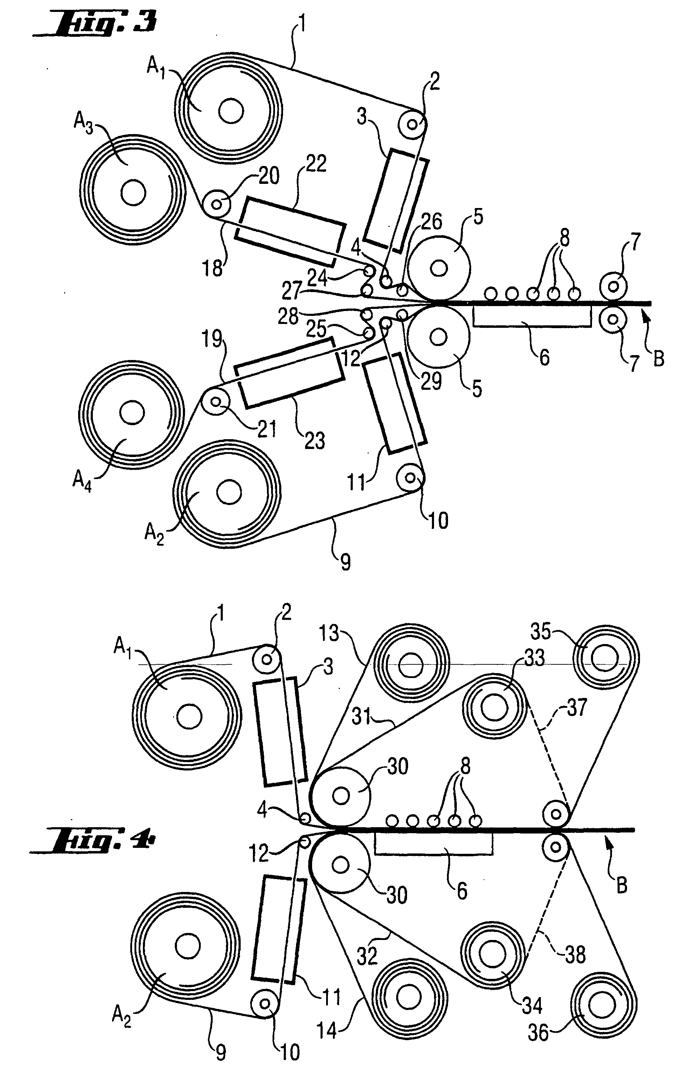

Dans le mode de réalisation illustré en figure 3, les modifications suivantes sont effectuées par rapport au mode de réalisation représenté en figure 2 : les quatre tissus 1, 9, 18, 19 sont directement assemblés au niveau de la calandre 5 où ils sont simultanément comprimés, chaque tissu provenant d'un dérouleur et ayant préalablement été chauffé dans un four à rayonnement infrarouge. Chaque tissu avant compression dans la calandre passe successivement sur deux barres tournantes chauffées similaires (4, 12, 24, 25, 26, 27, 28, 29) pour un meilleur déplissage, ces barres amenant en outre les tissus sous un angle choisi au niveau de la calandre 5 et permettant l'association directe de tous les tissus au niveau de la calandre.

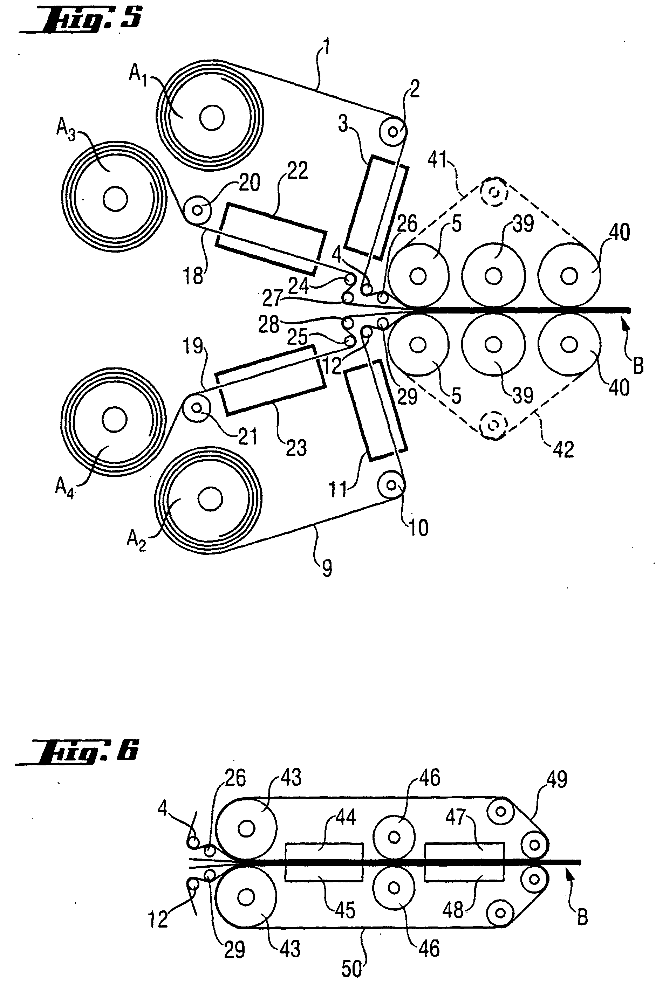

Dans le mode de réalisation représenté en figure 4, on utilise un dispositif similaire à celui illustré en figure 1 pour la fabrication de plaques à partir de tissus de fils co-mêlés verre/polytéréphtalate d'éthylène (PET). Dans ce mode de réalisation, la calandre 30 est cette fois chauffée, les cylindres de la calandre étant recouverts de PTFE.

Si le polymère colle encore sur les cylindres de la calandre 30, il peut être intéressant de dérouler simultanément deux films démoulants 31 et 32 en papier siliconé ou en toile de verre enduite de PTFE par exemple. Ces films sont issus respectivement des dérouleurs 33 et 34 et s'enroulent respectivement sur les supports en rotation 35 et 36. Cette configuration n'interdit pas de plaquer les films de surface 13 et 14. A deux films démoulants verre/PTFE, on peut préférer deux bandes sans fin de même nature (ou en aramide/PTFE ou métalliques) 37 et 38.

Dans le cas de fortes épaisseurs, et si l'on souhaite une très bonne planéité, il peut être intéressant de remplacer la table refroidissante 6 par plusieurs calandres à deux rouleaux. Ainsi dans le mode de réalisation illustré en figure 5, on remplace la table refroidissante du dispositif illustré en figure 3 par deux calandres 39 et 40.

S'il faut chauffer la première calandre 5, on peut également mettre en place deux bandes démoulantes 41 et 42 qui passent éventuellement aussi entre les calandres supplémentaires.

On peut également remplacer la ou les calandres et, le cas échéant, la table refroidissante par une presse à bandes telle que représentée en figure 6 (le dispositif en amont des barres tournantes, similaire par exemple à celui de la figure 5, n'étant pas représenté), cette presse comprenant une zone chaude (cylindres 43, plaques 44 et 45 et éventuellement calandre 46) une zone froide (éventuellement la calandre 46 et les plaques 47 et 48) et des bandes 49, 50 en toile de verre (ou d'aramide) enduite de PTFE par exemple.

Les exemples suivants illustrent, de manière non exhaustive, le procédé selon l'invention ainsi que les produits obtenus selon ce procédé.

EXEMPLE 1

Pour fabriquer une plaque de 1,3 m de largeur et de 1 mm d'épaisseur constituée de 60 % en poids de verre et 40 % de polypropylène coloré en noir dans la masse, on utilise une installation à une seule calandre telle que celle décrite à l'aide de la figure 1 (sans les éléments 13 à 17).

Deux tissus de 710 g/m$^2$ formés par des fils de stratifils (rovings) co-mêlés de 790 tex à 60 % de verre et 40 % de polypropylène en poids sont chauffés dans des fours respectifs d'une puissance similaire de l'ordre de 14 kW. La température à la surface des tissus est d'environ 190°C. Les barres de déplissage de 32 mm de diamètre sont chauffées à 230°C et tournent à une vitesse de 7 tours/min (0,7 m.min$^{-1}$) opposée au défilement des tissus.

La calandre à 40°C comprenant deux cylindres de 300 mm de diamètre chacun appuie avec une force de 2600 daN/m sur les tissus.

La plaque sort en continu avec une vitesse de 1,3 m/min. Cette plaque peut être bobinée sur un mandrin d'au moins 160 mm de diamètre.

Le taux volumique de vide de la plaque obtenue est inférieur à 5 %, ce qui rend cette plaque apte au thermoformage sur moule froid ou chauffé (par exemple à 80°C) avec des cycles inférieurs à la minute.

EXEMPLE 2

Pour fabriquer des plaques de 1,3m de largeur et de 2 mm d'épaisseur constituées de 60 % en poids de verre et 40 % de polypropylène coloré en noir dans la masse, on utilise l'installation de l'exemple 1 munie d'un troisième dérouleur à partir duquel la plaque obtenue dans l'exemple 1 est déroulée (plaque 15 de la figure 1).

Deux tissus de 710 g/m$^2$ similaires à ceux utilisés dans l'exemple 1 sont chauffés dans des fours similaires à ceux utilisés dans l'exemple 1. La température à la surface des tissus est d'environ 210°C. Les barres de déplissage de 32 mm de diamètre sont chauffées à 230°C et tournent à une vitesse de 7 tours/min opposée au défilement des tissus.

La plaque en âme est chauffée à 130°C dans un four réglé à 10 kW environ.

Deux films de surface de polypropylène noir de 50 µm d'épaisseur (films 13, 14 de la figure 1) sont collés à chaud sur les faces de la bande obtenue par association des tissus et de la plaque en âme.

La calandre à 65°C comprenant deux cylindres de 300 mm de diamètre chacun appuie avec une force de 2600 daN/m sur cette bande.

La bande formée de quatre tissus et deux films noirs, sort en continu avec une vitesse de 1,2 m/min. Elle est coupée transversalement pour donner des plaques d'une longueur de 2 m.

Le taux volumique de vide de chaque plaque obtenue est inférieur à 5 %.

EXEMPLE 3

Pour fabriquer des plaques de 1,5 m de largeur et de 1 mm d'épaisseur constituées de 75 % de verre et 25 % de polypropylène naturel en poids, on utilise l'installation de l'exemple 1 munie d'un troisième dérouleur à partir duquel une plaque de 0,4 mm à 75 % de verre et 25 % de polypropylène est déroulée.

Deux tissus de 560 g/m$^2$ composés de fils de stratifils co-mêlés de 690 tex à 75 % de verre et 25 % de polypropylène sont chauffés dans des fours similaires à ceux de l'exemple 1. La température à la surface des tissus est d'environ 220°C. Les barres de déplissage de 30 mm de diamètre environ sont chauffées à 230°C et tournent à une vitesse de 7 tours/min opposée au défilement des tissus.

La plaque en âme est chauffée à 130°C dans un four réglé à 10 kW environ.

La calandre à 34°C comprenant deux cylindres de 300 mm de diamètre chacun appuie avec une force de 3600 daN/m sur l'ensemble.

La bande formée par les trois éléments, sort en continu avec une vitesse de 1,2 m/min. Elle est coupée en plaques de 1,5 m de longueur.

EXEMPLE 4

Pour fabriquer des plaques de 1,4 m de largeur et de 1 mm d'épaisseur constituées de 65 % de verre et 35 % de PET naturel en poids, on utilise l'installation de l'exemple 3.

Deux tissus de 660 g/m$^2$ composés de fils de stratifils co-mêlés de 730 tex à 65 % de verre et 35 % de PET sont chauffés à une température d'environ 290°C. Les barres de déplissage de 32 mm de diamètre sont chauffées à 290°C et tournent à une vitesse de 7 tours/min opposée au défilement des tissus.

La plaque en âme à 65 % de verre et 35 % de PET est chauffée à 220°C dans un four réglé à 14 kW environ.

La calandre à deux cylindres de 300 mm de diamètre à 200°C revêtue de PTFE appuie avec une force de 3850 daN/m environ sur l'ensemble.

La bande formée par les trois tissus, sort en continu avec une vitesse de 1 m/min. Elle est coupée en plaques de 2,5 m de longueur.

EXEMPLE 5

Pour fabriquer des plaques de 1,4 m de largeur et de 1 mm d'épaisseur constituées de 65 % de verre et 35 % de PBT naturel en poids, on utilise l'installation de l'exemple 3.

Deux tissus de 660 g/m² composés de fils de stratifils co-mêlés de 730 tex à 65 % de verre et 35 % de PBT sont chauffés à une température d'environ 280°C. Les barres de déplissage de 50 mm de diamètre sont chauffées à 290°C et tournent à une vitesse de 0,9 m/min dans le sens de défilement des tissus.

La plaque en âme à 65 % de verre et 35 % de PBT est chauffée à 210°C environ dans un four réglé à 12 kW environ.

La calandre à deux cylindres de 300 mm de diamètre à 120-140°C en acier appuie avec une force de 3850 daN/m environ sur l'ensemble.

La bande formée par les trois tissus, sort en continu avec une vitesse de 1 m/min. Elle est bobinée sur un mandrin de 300 mm de diamètre.

Les plaques formées selon le procédé de l'invention sont particulièrement adaptées à la réalisation d'articles par thermoformage, notamment d'articles plans de grandes dimensions ou encore de carters ou d'enveloppes protectrices de machines, etc.

**Revendications**

1. Procédé de fabrication de plaques composites dans lequel :

   • on introduit en continu au moins une nappe (1) de fils, cette nappe (1) comprenant au moins deux matières présentant des points de fusion différents, dans une zone où elle est chauffée à une température comprise entre lesdits points de fusion et inférieure à la température de dégradation de la matière présentant le point de fusion le plus bas,
   • on fait passer la nappe sur au moins une barre tournante chauffée (4) à une température comprise entre lesdits points de fusion et inférieure à la température de dégradation de la matière présentant le point de fusion le plus bas,
   • on comprime la nappe au sortir de la ou des barres et on la refroidit de façon à former une bande composite (B),
   • on collecte la bande sous forme d'une ou plusieurs plaques composites.

2. Procédé selon la revendication 1, **caractérisé en ce que** la nappe comprend au moins 50 % en poids de fils co-mêlés.

3. Procédé selon la revendication 2, **caractérisé en ce que** les fils co-mêlés sont constitués de filaments de verre et de filaments de matière organique thermoplastique intimement mélangés.

4. Procédé selon l'une des revendications 1 à 3, **ca-**

**ractérisé en ce que** la nappe se présente sous forme de tissu(s).

5. Procédé selon l'une des revendications 1 à 4, **caractérisé en ce que** :

   • on introduit en continu au moins une seconde nappe (9) de fils comprenant au moins deux matières présentant des points de fusion différents, dans une zone où elle est chauffée à une température comprise entre lesdits points de fusion et inférieure à la température de dégradation de celle des matières de la seconde nappe présentant le point de fusion le plus bas,
   • on fait passer au moins la seconde nappe (9) sur au moins une seconde barre tournante chauffée (12) à une température comprise entre les points de fusion des matières de la seconde nappe (9) et inférieure à la température de dégradation de celle de ces matières présentant le point de fusion le plus bas,
   • on réunit au moins les deux nappes (1 ; 9) que l'on comprime simultanément au sortir d'au moins une des barres et on refroidit l'ensemble de façon à former une bande composite (B),
   • on collecte la bande sous forme d'une ou plusieurs plaques composites.

6. Procédé selon l'une des revendications 1 à 5, **caractérisé en ce que** l'on réunit et on comprime simultanément plusieurs tissu(s) et/ou association(s) de tissus et/ou nappe(s) de fils et/ou grille(s) et/ou structure(s) alvéolée(s) et/ou plaque(s) et/ou film(s) au sortir d'au moins une barre tournante.

7. Dispositif de fabrication d'au moins une plaque composite, ce dispositif comprenant :

   a) un ou des organe(s) d'alimentation ($A_1$ ; $A_2$) d'au moins une nappe de fils (1 ; 9),
   b) au moins un organe de chauffage (3 ; 11) de la nappe (1 ; 9),
   c) au moins une barre tournante chauffée (4 ; 12) ou une série de barres tournantes chauffées placées les unes à la suite des autres sur le passage de la nappe,
   d) et, en aval de la ou des barres tournantes chauffées, au moins un organe de compression (5) et éventuellement de refroidissement (6) de la nappe.

**Claims**

1. Method of producing composite sheets in which:

   • at least one web (1) of yarns which comprises at least two materials having different melting points is introduced continuously into a zone where it is heated to a temperature between the said melting points and below the degradation temperature of the material having the lowest melting point,

- the web is passed over at least one heated rotating bar (4) at a temperature between the said melting points and below the degradation temperature of the material having the lowest melting point,
- the web is compressed on leaving the bar or bars and is cooled in such a way as to form a composite band (B),
- the band is collected in the form of one or more composite sheets.

2. Method as claimed in Claim 1, **characterised in that** the web comprises at least 50% by weight of co-mingled yarns.

3. Method as claimed in Claim 2, **characterised in that** the co-mingled yarns are formed of glass filaments and filaments of thermoplastic organic material which are intimately mixed.

4. Method as claimed in one of Claims 1 to 3, **characterised in that** the web is in the form of fabric(s).

5. Method as claimed in one of Claims 1 to 4, **characterised in that**:

- at least one second web (9) of yarns which comprises at least two materials having different melting points is introduced continuously into a zone where it is heated to a temperature between the said melting points and below the degradation temperature of the material of the second web which has the lowest melting point,
- at least the second web (9) is passed over at least one second heated rotating bar (12) at a temperature between the melting points of the materials of the second web (9) and below the degradation temperature of the material which has the lowest melting point,
- at least the two webs (1; 9) are combined and are compressed simultaneously on leaving at least one of the bars and the combination is cooled in such a way as to form a composite band (B),
- the band is collected in the form of one or more composite sheets.

6. Method as claimed in one of Claims 1 to 5, **characterised in that** a plurality of fabric(s) and/or combination(s) of fabrics and/or web(s) of yarns and/or mesh(es) and/or cellular structure(s) and/or sheet (s) and/or film(s) are combined and compressed simultaneously on leaving at least one rotating bar.

7. Apparatus for producing at least one composite sheet, this apparatus comprising:

a) one or a plurality of feeding device(s) ($A_1$; $A_2$) for feeding at least one web of yarns (1;9),
b) at least one heating device (3; 11) for heating the web (1; 9),
c) at least one heated rotating bar (4; 12) or a series of heated rotating bars placed one after the other on the travel path of the web,
d) and, downstream of the heated rotating bar (s), at least one device for compressing (5) the web and possibly for cooling (6) the web.

**Patentansprüche**

1. Verfahren zur Herstellung von Verbundplatten, in welchem

- wenigstens eine aus Fäden gebildete Bahn (1), die mindestens zwei unterschiedliche Schmelzpunkte aufweisende Materialien umfasst, kontinuierlich in eine Zone geführt wird, wo sie auf eine Temperatur zwischen diesen Schmelzpunkten und unterhalb der Zersetzungstemperatur des den niedrigsten Schmelzpunkt aufweisenden Materials erwärmt wird,

- die Bahn über mindestens eine sich drehende Stange (4) geführt wird, die auf eine Temperatur zwischen diesen Schmelzpunkten und unterhalb der Zersetzungstemperatur des den niedrigsten Schmelzpunkt aufweisenden Materials beheizt wird,

- die Bahn nach der/den Stange/n verdichtet und derart abgekühlt wird, dass sich ein Verbundband (B) bildet, und

- das Band in Form einer oder mehrerer Verbundplatten gesammelt wird.

2. Verfahren nach Anspruch 1, **dadurch gekennzeichnet, dass** die Bahn mindestens 50 Gew.-% co-ersponnene Fäden enthält.

3. Verfahren nach Anspruch 2, **dadurch gekennzeichnet, dass** die co-ersponnenen Fäden aus Glasfilamenten und Filamenten aus thermoplastischem organischem Material, die innig miteinander vermengt sind, bestehen.

4. Verfahren nach einem der Ansprüche 1 bis 3, **dadurch gekennzeichnet, dass** die Bahn in Form von Gewebe/n vorliegt.

5. Verfahren nach einem der Ansprüche 1 bis 4, **dadurch gekennzeichnet, dass**

- wenigstens eine aus Fäden bestehende zweite Bahn (9), die mindestens zwei unterschiedliche Schmelzpunkte aufweisende Materialien umfasst, kontinuierlich in eine Zone, worin sie auf eine Temperatur von zwischen diesen Schmelzpunkten und unterhalb der Zersetzungstemperatur des den niedrigsten Schmelzpunkt aufweisenden Materials der zweiten Bahn erwärmt wird, geschickt,

- wenigstens die zweite Bahn (9) über mindestens eine sich drehende zweite Stange (12), die auf eine Temperatur von zwischen diesen Schmelzpunkten und unterhalb der Zersetzungstemperatur des den niedrigsten Schmelzpunkt aufweisenden Materials der zweiten Bahn (9) beheizt wird, laufen gelassen,

- wenigstens die zwei Bahnen (1; 9) vereinigt und nach mindestens einer der Stangen gleichzeitig verdichtet werden und das Ganze derart, dass sich ein Verbundband (B) bildet, abgekühlt und

- das Band in Form einer oder mehrerer Verbundplatten gesammelt wird.

6. Verfahren nach einem der Ansprüche 1 bis 5, **dadurch gekennzeichnet, dass** gleichzeitig ein/e oder mehrere Gewebe und/oder Gewebevereinigung/en und/oder Fadenbahn/en und/ oder Geflecht/e und/oder Zellstruktur/en und/oder Platte/n und/oder Film/e nach mindestens einer sich drehenden Stange vereinigt und verdichtet wird/werden.

7. Vorrichtung zur Herstellung wenigstens einer Verbundplatte, die

a) ein oder mehrere Organe ($A_1$; $A_2$) für die Zuführung mindestens einer Fadenbahn (1; 9),
b) mindestens ein Organ (3; 11) für die Erwärmung der Bahn (1; 9),
c) mindestens eine beheizte sich drehende Stange (4; 12) oder eine Reihe beheizter sich drehender Stangen, die im Weg der Bahn nacheinander angeordnet sind, und
d) nach der/den beheizten sich drehenden Stange/n mindestens ein Organ zur Verdichtung (5) und gegebenenfalls Abkühlung (6) der Bahn umfasst.

**Fig. 1**

**Fig. 2**

Fig. 3

Fig. 4

**Fig. 5**

**Fig. 6**